(19) Europäisches Patentamt / European Patent Office / Office européen des brevets

(11) **EP 4 586 194 A1**

(12) **EUROPEAN PATENT APPLICATION**

(43) Date of publication:
**16.07.2025 Bulletin 2025/29**

(21) Application number: **24202108.7**

(22) Date of filing: **24.09.2024**

(51) International Patent Classification (IPC):
**G06T 7/42** $^{(2017.01)}$    **G06T 5/70** $^{(2024.01)}$

(52) Cooperative Patent Classification (CPC):
**G06T 7/42; G06T 5/70;** G06T 2207/20021;
G06T 2207/20056; G06T 2207/20064;
G06T 2207/20084; G06T 2207/20204

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.01.2024 US 202463620134 P**
**18.09.2024 US 202418888994**

(71) Applicant: **Beijing YoJaJa Software Technology Development Co., Ltd.**
**Beijing 100015 (CN)**

(72) Inventors:
• **MENG, Xuewei**
  **Beijing, 100102 (CN)**
• **ZHANG, Wenhao**
  **Beijing, 100102 (CN)**
• **LIU, Chen**
  **Beijing, 100102 (CN)**
• **HUANGFU, Xuchang**
  **Beijing, 100102 (CN)**

(74) Representative: **Müller-Boré & Partner**
**Patentanwälte PartG mbB**
**Friedenheimer Brücke 21**
**80639 München (DE)**

(54) **FILM GRAIN MEASUREMENT USING ADAPTABLE REGION SELECTION**

(57) In some embodiments, a method receives a first image and a second image for a comparison of film grain. The first image or the second image is analyzed to determine a first texture representation of the first image or a second texture representation of the second image. A set of regions is analyzed based on the first texture representation or the second texture representation. The method converts the set of regions from a spatial domain to a frequency domain to generate a first frequency domain representation for the set of regions in the first image and a second frequency domain representation for the set of regions in the second image. A score is generated for an assessment of differences of the film grain in the first image and the second image based on the first frequency domain representation and the second frequency domain representation.

FIG. 1

Description

## CROSS REFERENCE TO RELATED APPLICATIONS

Pursuant to 35 U.S.C. §119(e), this application is entitled to and claims the benefit of the filing date of U.S. Provisional App. No. 63/620,134 filed January 11, 2024, entitled "FREQUENCY DOMAIN FILM GRAIN OBJECTIVE METRICS WITH ADAPTIVE REGION SELECTION", the content of all of which is incorporated herein by reference in its entirety for all purposes.

## BACKGROUND

Film grain may be one of the distinguishing characteristics of videos that are produced, such as in videos captured by traditional film cameras (e.g., shows or movies produced by the movie industry). Film grain may be a perceptually pleasing noise that could be illustrated with artistic intention. However, including film grain in videos that are streamed over a network to client devices may pose technical challenges, such as the bitrate required to encode videos that include film grain may be high. This results in a high bandwidth requirement that may not be compatible with streaming environments. To save bandwidth, film grain may be removed from the videos before streaming the videos to client devices. However, viewers may not be satisfied with the visual quality of the videos without the film grain included.

One technique may be to synthesize film grain at the client device to add the film grain back on top of decoded video frames, which mimics the film grain in the source video. This process may introduce film grain back into the video. However, the film grain synthesis may be a challenging task to recover an accurate replica of the original film grain in the source video. Further, the film grain synthesis may also add undesirable effects to the video frames, such as new visual artifacts.

## BRIEF DESCRIPTION OF THE DRAWINGS

The included drawings are for illustrative purposes and serve only to provide examples of possible structures and operations for the disclosed inventive systems, apparatus, methods and computer program products. These drawings in no way limit any changes in form and detail that may be made by one skilled in the art without departing from the spirit and scope of the disclosed implementations.

FIG. 1 depicts a simplified system for assessing film grain in images according to some embodiments.

FIG. 2 depicts a simplified system for synthesizing film grain for a video according to some embodiments.

FIG. 3 depicts a more detailed example of a film grain synthesis system according to some embodiments.

FIG. 4 depicts a system that performs a conversion from the spatial domain to the frequency domain, and then generates an assessment score according to some embodiments.

FIG. 5 depicts an example of a steerable pyramid bandpass filter in four directions in the spatial domain according to some embodiments.

FIG. 6 depicts an example of the output of the steerable pyramid according to some embodiments.

FIG. 7 depicts a simplified flowchart of a method for performing the spatial-to-frequency conversion according to some embodiments.

FIG. 8 depicts a simplified flowchart for performing the metrics calculation according to some embodiments.

FIG. 9 depicts an example of the server system according to some embodiments.

FIG. 10 depicts a more detailed example of the server system according to some embodiments.

FIG. 11 depicts an input image, an edge map of the input image, and the output of the non-texture region detection according to some embodiments.

FIG. 12 depicts a simplified flowchart of a method for determining an assessment score with an adaptive region selection according to some embodiments.

FIG. 13 illustrates one example of a computing device according to some embodiments.

## DETAILED DESCRIPTION

Described herein are techniques for a video processing system. In the following description, for purposes of explanation, numerous examples and specific details are set forth to provide a thorough understanding of some embodiments. Some embodiments as defined by the claims may include some or all the features in these examples alone or in combination with other features described below, and may further include modifications and equivalents of the features and concepts described herein.

A system performs a subband based film grain assessment (SFGA) process. The process may assess the film grain in two images, such as the assessment may assess the similarity of the film grain in the two images. In the process, a first image (e.g., a reference image) and a second image (e.g., a test image) may be input into a film grain assessment system. The film grain of the test image may be analyzed to determine the similarity of its film grain to the film grain of the reference image. The film grain assessment system transforms the reference image and the test image from the spatial domain to the frequency domain. This results in a frequency domain representation for each of the reference image and the test image. In some embodiments, the film grain assessment system may select subbands in the frequency domain for each of the reference image and the test image, or the entire frequency domain representation may be used. Then, the film grain assessment system compares a distribution of frequencies (e.g., subband noise power spectra) between the reference image and the test image. The film grain assessment system may analyze a difference between the distributions to determine an assessment score. For example, the score may measure a similarity of the film grain between the reference image and the test image. In some embodiments, a higher score may indicate that the film grain in the reference image and the test image may be more similar compared to a lower score, which indicates that the film grain in the reference image and the test image is not as similar.

The subband based film grain assessment process provides many advantages. For example, film grain may appear as noise in videos. In some examples, comparing the film grain in the spatial domain pixel by pixel in two images may not provide an accurate indication of the similarity of the film grain. For example, film grain may have different values for respective pixels in two different images, which would cause the comparison to indicate that the film grain is not similar. However, the nature of film grain may make the film grain appear to be similar in the two images when viewed from a human perspective. For example, even though the values are different, the noise that represents the film grain may appear to be similar to a human viewer. The conversion from the spatial domain to the frequency domain may capture the existence of similar film grain in the two images because the frequency domain relies on the frequency of characteristics of the film grain. The noise that appears as film grain in the images may be slightly different in values when analyzed in the spatial domain, but in the frequency domain, the similarity in frequency is captured. The frequency domain analysis can better extract the feature of noise and describe the look of the noise compared to the spatial domain. If two similar film grain images are analyzed, their frequency domain characteristics may be quite similar to each other, but the pixel level/spatial domain characteristics are quite different because film grain may look like random noise. If the similarity of two film grain images is calculated by pixel-by-pixel method in the spatial domain, the similarity will be quite low when the film looks quite similar to human perception. Accordingly, the assessment score that is output by the film grain assessment process may be more accurate than the comparison in the spatial domain when the objective is to detect similar film grain in images as perceived by a human viewer.

System

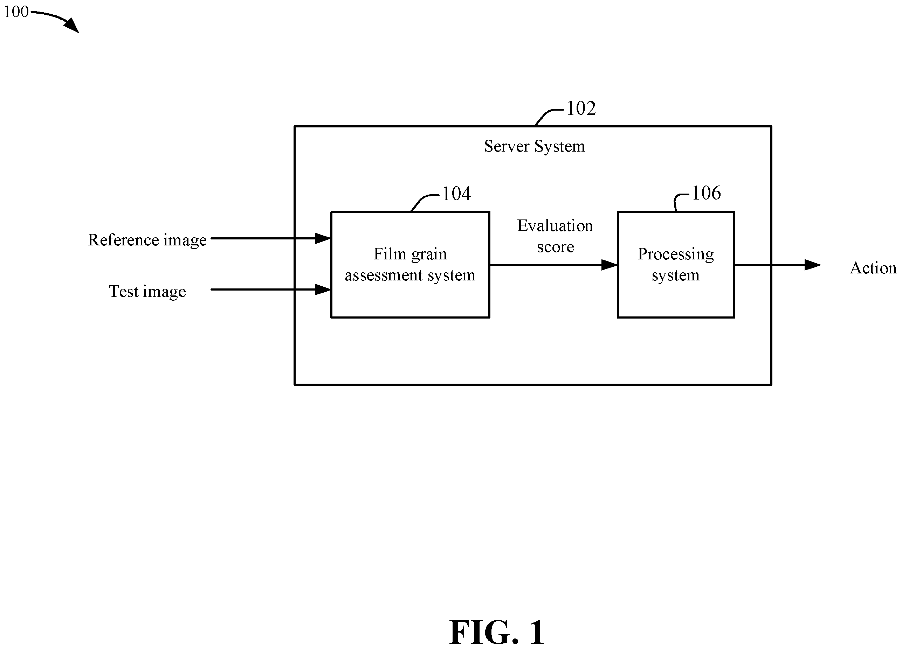

FIG. 1 depicts a simplified system 100 for assessing film grain in images according to some embodiments. A server system 102 may include one or more computing devices that can assess film grain in images, such as a reference image and a test image. Server system 102 includes a film grain assessment system 104 and a processing system 106.

Film grain assessment system 104 receives a reference image and a test image, and outputs an assessment score. The assessment score may assess the film grain found in the reference image and the test image. In some embodiments, the assessment score may measure the similarity of the film grain in the reference image and the test image. Although two images are described as being compared, more than two images may be compared.

The reference image and the test image may be different types of images. For example, the reference image and the test image may be two actual captures of images, such as both the reference image and the test image may be captured by a camera. Also, the reference image and the test image may be two synthesized film grain images. For example, the images may have synthesized film grain, and not captured film grain. Also, one of the images may be an actual capture and one of the references may be an image with synthesized film grain. Also, the images may be just the film grain. For example, an image that includes content and film grain may be separated out into a clean image and an image of film grain. The image of film grain may be compared to synthesized film grain where both images do not include the content of the clean image. Other combinations may also be appreciated.

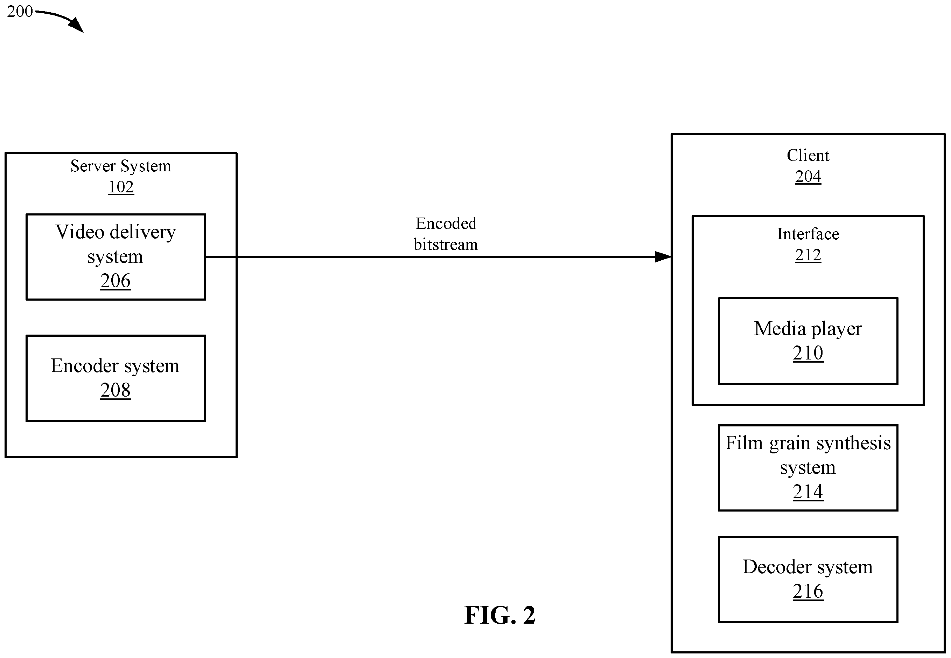

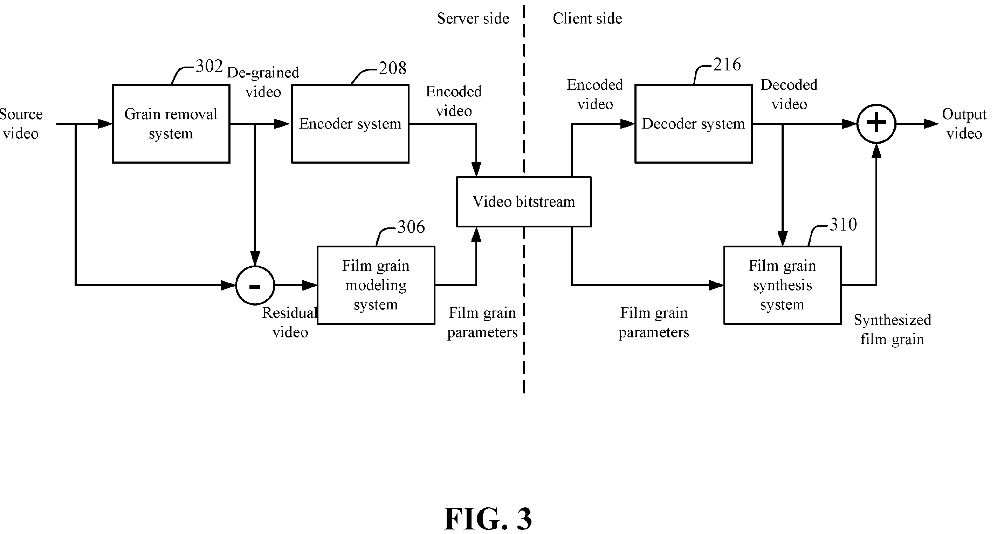

A processing system 106 may receive the assessment score and use the assessment score to perform an action. For example, in a film grain synthesis system, which is described in more detail in FIGs. 2 and 3, the assessment score may be used to evaluate the similarity of the film grain on the encoder side and the synthesized film grain on the decoder side. An action may be to change parameters for synthesizing the film grain based on the assessment score, such as parameters may be automatically changed to make the synthesized film grain more similar to the original film grain. Also, some images may be flagged as including dissimilar film grain in a quality control process. Other use cases may also include helping controlling the film grain addition process, transferring the film grain styling from one video to another video, or performing quality control to guarantee the film grain is consistent through multiple videos. For example, performance quality control could guarantee the film grain is consistent in a video, especially on the similar regions in the video, such as the a wall with moving people. The film grain on the wall should be consistent.

The system aims to provide a general purpose film grain measurement and comparison. Given any kind of pair of film grain, which could be two actual captures, or two synthesized film grain, or one real capture and one synthesized one, the system can assess the film grain in the images to determine a similarity between them.

The following will now describe the film grain assessment system in more detail. A film grain synthesis system will be described first, but the film grain assessment system is not limited to being used in that system.

Film Grain Synthesis

FIG. 2 depicts a simplified system 200 for synthesizing film grain for a video according to some embodiments. A content provider may operate video delivery system 206 to provide a content delivery service that allows entities to request and receive media content. The content provider may use video delivery system 206 to coordinate the distribution of media content to client 204. The media content may be different types of content, such as on-demand videos from a library of videos and live videos. In some embodiments, live videos may be where a video is available based on the linear schedule. Videos may also be offered on-demand. On-demand videos may be content that can be requested at any time and not limited to viewing on a linear schedule. The videos may be programs, such as movies, shows, advertisements, etc. Server system 102 may receive a source video that may include different types of content, such as video, audio, or other types of content information. The source video may be transcoded (e.g., encoded) to create an encoded version of the source video, which may be delivered as an encoded bitstream to client 204. Although the delivery of videos is shown from video delivery system 206 to client 204, video delivery system 206 may use a content delivery network (not shown) to deliver videos to client 204.

An encoder system 208 may encode a source video into the encoded bitstream. Different types of encoders may be used, such as encoders that use different coding specifications. In some embodiments, the source video may have film grain, but that film grain may be removed from the source video and not included in the encoded video frames of the encoded bitstream. In other embodiments, the source video may not have film grain included, but it may be desirable to add film grain to the decoded video frames.

Client 204 may include different computing devices, such as smartphones, living room devices, televisions, set top boxes, tablet devices, etc. Client 204 includes an interface 212 and a media player 210 to play content, such as a video. At client 204, decoder system 216 receives the encoded bitstream, and decodes the encoded bitstream into decoded video frames.

Film grain may be present in some videos, such as in shows and movies that are shot with traditional film cameras. Film grain may be a visible texture or pattern that appears in video shot on film. The film grain may appear as noise in the videos. As discussed above, the film grain may be removed from the source video before encoding, and the encoded bitstream may not include the film grain from the source video when sent from server system 102 to client device 204. Preserving the film grain from the source video in the encoded bitstream may be challenging for multiple reasons. For example, when film grain is present in the original source video, the bitrate of the encoded bitstream may be increased. Also, the random nature of film grain in source videos may cause the bitrate to randomly change as the bitrate increases for frames when film grain is encountered, which may affect the delivery of the encoded bitstream to client 204. The random nature may affect the playback experience as the bitrate changes during the playback, which may cause re-buffering. Further, the random nature of the film grain in the video makes it difficult to predict when (e.g., which frames) and where (e.g., where in a frame) the film grain will occur in the source video using prediction schemes in video coding specifications. This may cause the compression to be inefficient. As discussed above, digital cameras may not produce film grain in videos or frames of the source video may not include film grain, but the system may still add film grain to the videos.

In light of the above, the encoded bitstream may not include the film grain from the source video; however, a film grain synthesis system 214 may synthesize film grain that can be added to the decoded video frames. That is, film grain is removed in the encoder side and added in the decoder side.

FIG. 3 depicts a more detailed example of a film grain synthesis system according to some embodiments. A source video is received at a grain removal system 302. Grain removal system 302 may remove film grain from the source video. The output is a de-grained video in which an encoder system 208 can encode into encoded video. Here, the clean images without the film grain are encoded.

A difference between the source video and the de-grained video results in a residual video, which may represent the film grain found in the source video. A film grain modeling system 306 receives a residual video and determines film grain parameters. The film grain parameters may represent parameters that are determined to synthesize film grain that is found in the source video.

The encoded video in the film grain parameters may be sent in a video bitstream to client 204. A decoder system 216 receives the encoded video, decodes the encoded video into decoded video. Also, a film grain synthesis system 310 receives the film grain parameters. Film grain synthesis system 310 uses the parameters to synthesize film grain. For example, the film grain may be modeled based on the film grain parameters. The synthesized film grain is then combined with the decoded video and the result is a video with synthesized film grain as output.

The similarity of the synthesized film grain to the original film grain may vary. In some embodiments, images from the video with the synthesized film grain may be compared with images from the source video that included the captured film grain. For example, a company may want to evaluate the similarity of the synthesized film grain to the film grain that appears in the original captured video. Although this use case is described, other use cases may be appreciated. For example, images with only film grain may be compared, such as images with only the residual video and images with the synthesized film grain.

The following will now describe the assessment of film grain.

Spatial Domain to Frequency Domain Conversion.

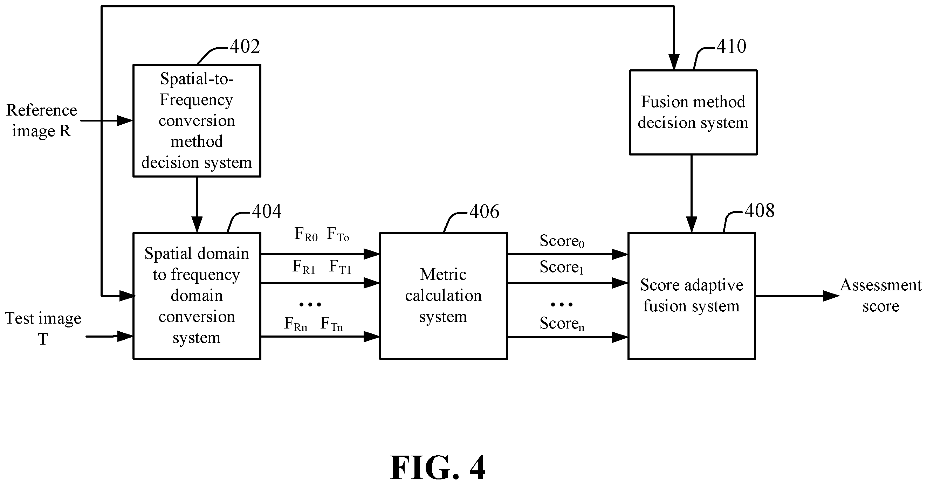

FIG. 4 depicts a system that performs a conversion from the spatial domain to the frequency domain, and then generates an assessment score according to some embodiments. A reference image R and a test image T may be compared. Film grain assessment system 104 converts the reference image R and the test image T from the spatial domain to the frequency domain. As mentioned above, reference image R and test image T may be different types of images, such as an image with the original film grain and an image with synthesized film grain, images with only the original film grain and synthesized film grain, or other types of images.

A spatial to frequency conversion method decision system 402 (hereinafter decision system 402) receives reference image R. Decision system 402 may analyze characteristics of reference image R and determine settings for a spatial domain to frequency domain conversion system 404 (hereinafter conversion system 404). In some embodiments, the settings may be used to perform the spatial domain to frequency domain conversion, such as parameters on how many directions or which subbands to use in the frequency domain, a range of frequency subbands to use, the bandpass filters to use in a Fast Fourier Transform, the Fast Fourier Transform to use, etc. The frequency bands could be determined using different ways, such as using rules that determine subbands to use based on image characteristics. Also, a prediction network may receive the image as input and output subbands to use.

Conversion system 404 receives reference image R and test image T. Conversion system 404 converts reference image R and test image T from the spatial domain to the frequency domain. Reference image R and test image T may be converted individually into respective frequency domain representations. The conversion from the spatial domain to the frequency domain may transform an image from a representation of pixel values (e.g., intensities ) to a representation of frequency components. The spatial domain may be a space in which pixel values represent the intensity of the image at spatial locations, such as x, y coordinates. The frequency domain represents the image in the terms of its frequency components, which may describe how the pixel values change across the image. For example, the frequency components may indicate how quickly the pixel values (e.g., intensity) change over the space. In the frequency domain, low frequencies may represent gradual changes in pixel values, such as non-texture areas, and high frequencies may represent rapid changes in pixel values, such as edges or fine details (e.g., texture regions).

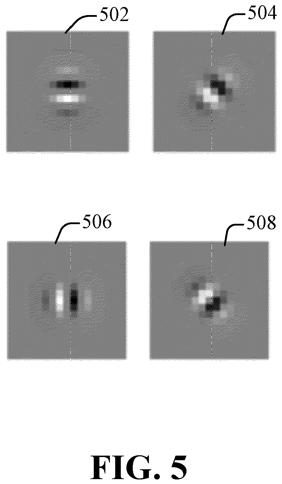

As will be discussed in more detail below, conversion system 404 may use a process that converts the images into subbands. In some embodiments, a steerable pyramid may be used to derive several subbands. The Steerable Pyramid is a linear multi-scale, multi-orientation image decomposition that provides a useful front-end for image-processing and computer vision applications. The steerable pyramid: can do multi-scale, multi-orientation image decomposition. Other filters may be a Gaussian Pyramid, Laplacian pyramid, Wavelet filter, and so on. The different scales of frequencies in the steerable pyramid may result in difference subbands with multiple directions. The use of the steerable pyramid will be described in more detail below in FIGs. 5, 6, and 7.

Conversion system 404 may select some of the subbands based on the settings received from decision system 402. For example, higher frequency subbands may be selected because these subbands may include content that have the most impact on how the film grain looks. However, other frequency subbands could be selected if it is determined those frequency subbands have a higher impact on the film grain. The selected subbands are then converted from the spatial domain to the frequency domain. The output of conversion system 404 may be the subbands in the frequency domain, which may be represented as $F_{R0}$, $F_{R1}$,..., $F_{Rn}$ for reference image R and $F_{T0}$, $F_{T1}$,..., $F_{Tn}$, for test image T. The subscripts R0, R1, Rn may represent different subbands for reference image R. Similarly, the subscripts T0, T1, Tn represent the same subbands for test image T. In some embodiments, conversion system 404 performs a transformation, such as a Fast Fourier Transform, to convert the subbands from the spatial domain to the frequency domain.

A metric calculation system 406 receives the frequency domain representation of the subbands and performs a metrics calculation. The subbands may be a two-dimensional representation in the frequency domain, such as a two-dimensional (2D) array of values of the frequency components. Metrics calculation system 406 converts the 2D representation to a one-dimensional (1D) representation for the subbands. Different methods may be used to convert a two-dimensional array representing the subband in the frequency domain to a one-dimensional array representing the subband in the frequency domain. The one-dimensional representation may be a vector. For example, the one-dimensional array of values represent frequency components for each respective subband.

Metrics calculation system 406 then generates a distribution of the frequency values, such as a noise power spectrum for each subband. The noise power spectrum may describe how noise varies with frequency, such as the distribution of noise power for the values of frequency for each subband.

Metric calculation system 406 then compares the distributions for each selected subband of the reference image and the test image to generate respective scores for each respective subband. For example, the output may be score 0, score 1, ..., score N for respective subbands 0, 1, ..., N. In some embodiments, the score is based on a difference between two distributions of the subbands. In some embodiments, a Jensen-Shannon divergence of the noise power spectrum for subbands of the reference image and the test image may be used. The Jensen-Shannon divergence measures the similarity or divergence across the noise power spectra of the two subbands for the reference image and the test image. Although a Jensen-Shannon divergence is used, other methods to determine the similarity or divergence of the distributions for a respective subband of the reference image and the test image may be used.

The system can better extract the feature of noise and describe the look of the noise. Some of the widely used spatial domain quality metrics fail for film grain quality assessment, such as PSNR, SSIM, MS-SSIM. If the system looks at two similar film grain, their frequency domain characteristics are quite similar to each other, but the pixel level/spatial domain characteristics are quite different because film grain may look like some random noise. So if the system calculates the similarity of two film grain image by pixel-by-pixel method, the similarity will be quite low when the film grain may look quite similar to a human viewer.

A score adaptive fusion system 408 may receive the scores and combine the scores into an assessment score. In some embodiments, a fusion method decision system 410 may receive reference image R and determine the fusion method to use. For example, an average, a weighted average, a maximum of the weighted average, a minimum of the weighted average, machine learning or deep learning methods, or other methods may be used. The weights may be determined based on features of the reference image or machine learning methods. For example, based on analyzing the characteristics of reference image R, weights for different subbands that may be more important may be determined. In some embodiments, more important subbands may include characteristics in which film grain may be more noticeable, such as low texture regions, may be weighted higher. In some embodiments, the following metric calculation may be used:

$$S = \sum_{i=0}^{N-1} w_i \times d(f_{i1} - f_{i2}),$$

where $f_{i1}$ and $f_{i2}$ are subbands of the reference image (e.g., image1) and the test image (e.g., image2). $d(\cdot)$ is a function that describes the distance/similarity between subband $f_{i1}$ and $f_{i2}$. $w_i$ is the weight assigned to the subband, and $\sum_{i=0}^{n-1} w_i = 1$. N is the number of subbands.

As mentioned above, a steerable pyramid may be used in the spatial domain to frequency domain conversion. The following will now describe the use of the steerable pyramid.

Steerable Pyramid

As discussed above, conversion system 404 may use a steerable pyramid to derive subbands. The steerable pyramid may be a multi-scale, multi-orientation image decomposition that is translation invariant, but also includes representations of orientation. The basic functions are oriented (e.g., steerable) filters, localized in space and frequency. Other filters that may be used include Gaussian Pyramid, Laplacian pyramid, wavelet filter, and so on.

The steerable pyramid may break down an image into subbands, where each subband represents spatial frequency content at different orientations and scales. FIG. 5 depicts an example of a steerable pyramid bandpass filter in four directions in the spatial domain according to some embodiments. The four directions shown may be 0 degrees at 502, 45 degrees at 504, 90 degrees at 506, and 135 degrees at 508. Here, the filters are oriented in different angles. The different directions may capture features and edges that are aligned to the directions, such as the 0 degree filter may capture features and edges aligned along the horizontal axis, the 45 degree filter may capture features and edges that are aligned along the 45 degree direction, and so on. Although these directions are used, other directions may be appreciated and different numbers of directions may be used.

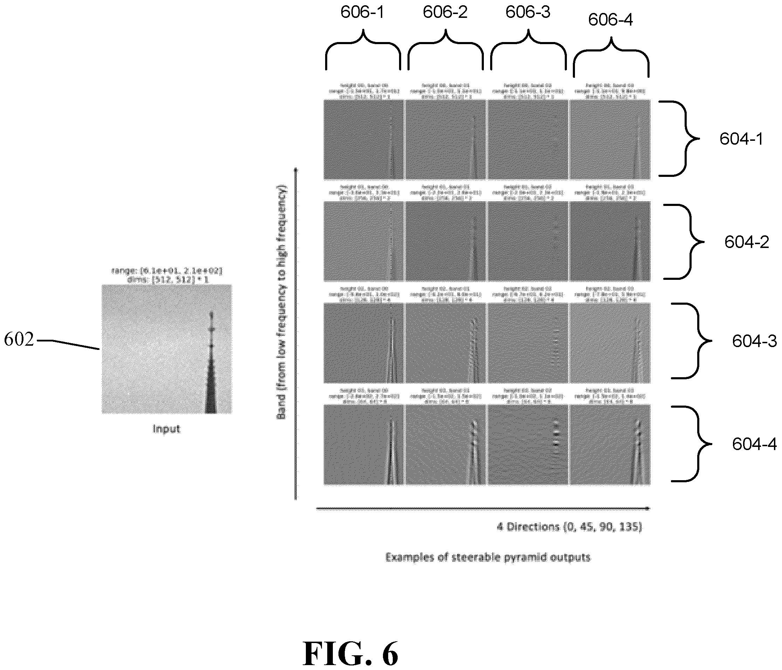

FIG. 6 depicts an example of the output of the steerable pyramid according to some embodiments. Here, there are four subbands and four directions. However, the number of subbands and directions may be adjusted. In some embodiments, four subbands and six directions may be used. At 602, an input of an image, such as the reference image or the test image is shown. Different subbands are shown at 604-1, 604-2, 604-3, and 604-4. Each subband may include a number of directions. For example, directions corresponding to the four steerable pyramid filters are shown at 606-1, 606-2, 606-3, and 606-4.

Each subband may correspond to a different scale of frequency in the image, such as from a low frequency to a high frequency. For example, subband 604-1 may include higher frequency components and subband 604-4 may include lower frequency components. The higher frequency components may be the highest level of the steerable pyramid and correspond to the finest level of detail in the image. A height may define the level of the steerable pyramid, such as the highest level is a height 00, a next highest level is height 01, then height 02, and height 03. The highest level may capture the highest spatial frequencies meaning it represents the smallest and sharpest features in the image, such as fine edges or textures. The lower frequency subbands may be a coarser scale compared to height 00. For example, height 01 may capture lower spatial frequencies and represent slightly larger features and broader patterns in the image. As the height moves from height 00, to height 01, height 02, and height 03, and so on, a reduction in resolution and focus on broader more general features in the image is captured.

The higher frequency subbands may capture finer details in the image, which may better capture the film grain in the image. The broader features located in the subbands with a lower frequency, such as height 02 and height 03 may not capture the details of the film grain as well as the subbands at height 00 and height 01. By separating out the image in the frequency in domain into different subbands, the assessment may focus on subbands that may characterize the film grain better. By removing subbands that do not represent the film grain as accurately, the assessment may be improved. In some embodiments, the system uses four subbands and six directions and chooses the high frequency band (corresponding to height00 in FIG. 6) as the input of the Fast Fourier Transform, but other numbers of bands and directions may be used. For example, all subbands may be used, and subbands may be weighted based on a determined importance. In some embodiments, the use of the subbands may improve the analysis. A full frequency band based metric may not capture the main features of film grain. Also, the human eye may be only sensitive to certain frequency subbands when looking at film grain. If taking the whole band as the input to the metric, some frequency bands that human eyes are not sensitive to may cause interference to the metric results.

## Spatial-to-Frequency Conversion Method

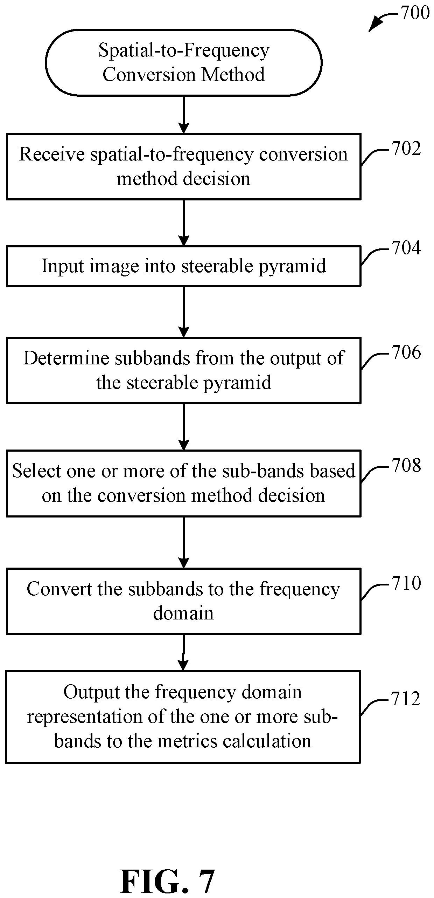

FIG. 7 depicts a simplified flowchart 700 of a method for performing the spatial-to-frequency conversion according to some embodiments. At 702, conversion system 404 receives the spatial-to-frequency conversion method decision. The decision may specify settings to perform the spatial-to-frequency conversion, such as the number of directions to use in the steerable pyramid.

At 704, conversion system 404 inputs the image into the steerable pyramid. The steerable pyramid may use a number of filters of different directions. At 706, conversion system 404 determines the subbands from the output of the steerable pyramid. For example, the output of the steerable pyramid may be multiple subbands in different directions that capture the image details at specific scales and orientations. An example of the output is described in FIG. 6.

At 708, conversion system 404 selects one or more of the subbands based on the conversion method decision. For example, for some videos, using the high frequency subbands may be more useful, and for some videos using the low frequency subbands may be useful to analyze the film grain. As mentioned above, the one or more of the higher frequency subbands may be used.

At 710, conversion system 404 converts the subbands to the frequency domain. For example, a Fast Fourier Transform may be used to convert the subbands from the spatial domain to the frequency domain. The result may be multiple frequency domain representations for the directions of a subband. For example, for subband 604-1, each representation for the four directions is converted into four representations in the frequency domain. At 712, conversion system 404 outputs the frequency domain representation for the one or more subbands to metrics calculation system 406. Thereafter, the metrics calculation may be performed.

In some embodiments, the steerable pyramid may be applied after the conversion to the frequency domain. Here, the image may be converted to the frequency domain using a Fast Fourier Transform. Then, the steerable pyramid is applied to the frequency representation of the image to generate subbands in different directions. The resulting subbands may be similar to the subbands generated above.

## Metrics Calculation.

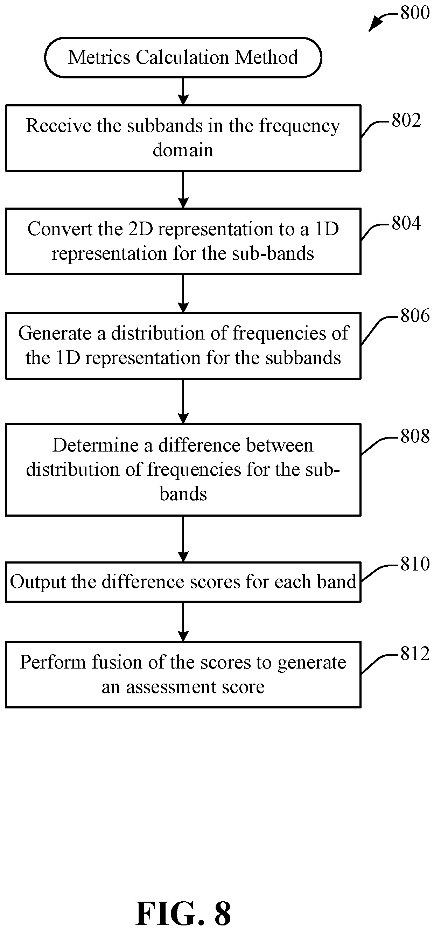

FIG. 8 depicts a simplified flowchart 800 for performing the metrics calculation according to some embodiments. At 802, metrics calculation system 406 receives the subbands in the frequency domain for the reference image and the test image. The representations may be a two-dimensional array of values that represent the output of the steerable pyramid in the frequency domain. The following may be performed for each direction in a subband for the reference image and the test image. At 804, metric calculation system 406 converts the 2D representation to a one-dimensional representation for the subbands. For example, each representation for a direction is converted to a one-dimensional representation. Different methods may be used to convert a two-dimensional array representing the subband in the frequency domain to a one-dimensional array representing the subband in the frequency domain. The one-dimensional representation may be a vector.

At 806, metric calculation system 406 generates a distribution of frequencies of the one-dimensional representation for the subbands. A distribution may be generated for each direction for a subband.

At 808, metric calculation system 406 determines a difference between the distribution of frequencies for the respective subbands for the reference image and the test image. Each direction for each band may be compared to each other. Then, the differences for a subband may be combined. The difference for the different directions of the subbands may be combined differently. For example, a weighted average of the different directions for a subband may be used to determine the score for the subband. Each subband may be associated with a score. In other embodiments, the directions may be combined for a subband for the reference image and the test image and then a difference is determined. Then, at 810, metric conversion system 406 outputs the scores for each subband, such as a $score_0$, $score_1$, ..., score". At 812 score-adaptive fusion system 408 performs a fusion of these scores for the subbands to generate an assessment score. As discussed above, the fusion may combine these scores using different methods. The following may be used:

$$Score = \frac{Score_0 + Score_1 + ,,, + Score_n}{n+1}$$

The assessment may allow processing system 106 to evaluate the similarity or divergence of the film grain in the reference image and the test image. By using the frequency domain to perform the evaluation, the assessment of similarity between the film grain is improved. For example, even if the film grain has different values in the spatial domain, the film grain may look similar to users. Using the comparison in the frequency domain may capture film grain that may look similar, but have different values in the spatial domain. Also, the decomposition of the images into using the steerable pyramid into subbands may allow the system to focus on subbands that may represent the film grain more accurately.

### Adaptive Region Detection

Server system 102 may use an adaptive region detection to adaptively select regions to analyze for the comparison of film grain between the reference image and the test image. The adaptive region detection may select regions in which the comparison of film grain may lead to a more accurate assessment score. For example, there may be regions in which the film grain may be more noticeable to human viewers. In some embodiments, non-texture regions, such as flat regions, may be regions in which film grain may be more noticeable. This is in contrast to high texture regions in which the texture may hide the details of the film grain making film grain harder to perceive to human viewers.

A non-texture region may include characteristics of smoothness and lack of detail, such as there may be a relative uniform values or little variation in pixel intensity in low texture regions or non-texture regions. Also, there may be minimal patterns or repeated structures in the non-texture region. Examples of non-texture regions include a solid color wall, a sky, etc. A texture region may include significant variations in pixel intensity and include various patterns or structures that may be repeated. The visual content in texture regions may change frequently. Different examples of texture regions may include hair, trees, etc. The little or no variation in non-texture regions may allow the noise of film grain to be more easily perceptible to human viewers whereas the complex patterns and structures of a texture region may hide the noise of film grain from being perceivable by a human viewer.

When the entire image is used and in a comparison between a reference image and a test image, certain regions may obscure the results of the comparison. For example, using information from a high texture region in the comparison may skew the accuracy of the assessment score. If film grain cannot be perceived in high texture regions by a human viewer, the contribution to the assessment score for film grain that is found in the texture regions be pertinent compared to the comparison of film grain in low texture regions where the difference may be noticeable to human viewers. Accordingly, assessment scores may be a more accurate capture of the differences in film grain if regions are selected that include film grain that may be more easily perceived by human viewers.

### System

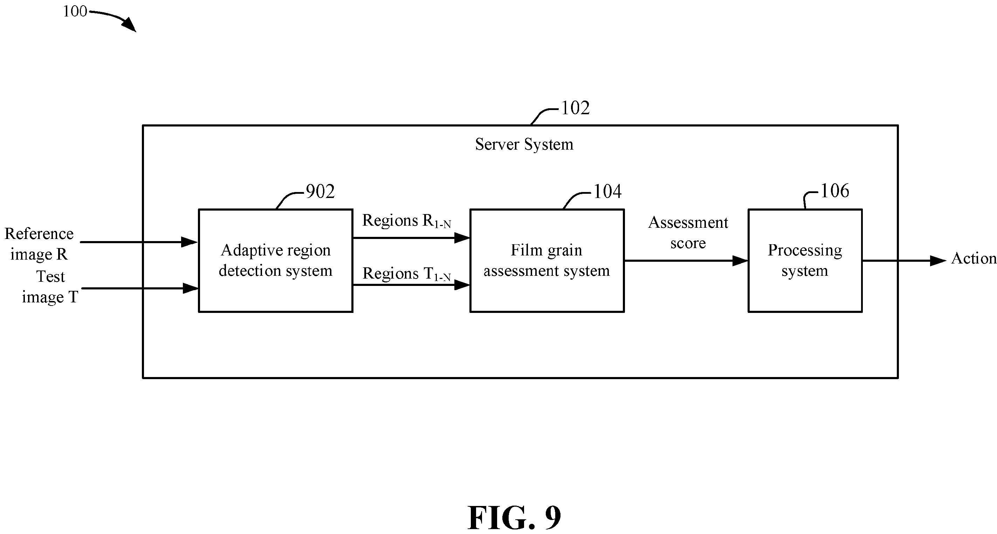

FIG. 9 depicts an example of server system 102 according to some embodiments. Server system 102 includes an adaptive region detection system 902, film grain assessment system 104, and processing system 106. The output of adaptive region detection system 902 are regions $R_1$, ..., $R_N$, and regions T1, ..., $T_N$. Here there may be multiple regions for reference image R, and the same regions for test image T. Adaptive region detection system 902 may determine the regions by analyzing reference image R to select the regions, and then corresponding regions in test image T are used. Other methods may also be used, such as by analyzing test image T, or by analyzing a combination of reference image R and test image T.

Film grain assessment system 104 may analyze the respective regions from reference image R and test image T. For example, region $R_1$ and region $T_1$ may be analyzed, region $R_2$ and region $T_2$ may be analyzed, etc. This may result in multiple scores from the regions, such as scores 1, 2, ..., N for the N regions. Then, film grain assessment system 104 may combine the scores into an assessment score.

Processing system 106 may then use the assessment score to perform an action, such as the same actions as described above with respect to FIG. 1.

### Region Detection

Adaptive region detection system 902 may use different methods to select the regions. In some embodiments, edge detection may be used. However, other features of the image may be used to select the regions, such as segmentation to select regions, neural network based methods that select the regions, etc. In some embodiments adaptive region detection system 902 generates a frequency domain film grain objective metric with adaptive region selection. The film grain metric with region selection on the content and film grain may improve performance. This also greatly improves the completeness of the method and expands the application scenarios. If a region is flat, it mainly has low-frequency bands and it does not have impact on the high frequency film grain in texture regions. So the high frequency content is removed by region selection and the image that is used could be content and film grain without affecting the assessment score due to the presence of film grain in texture regions.

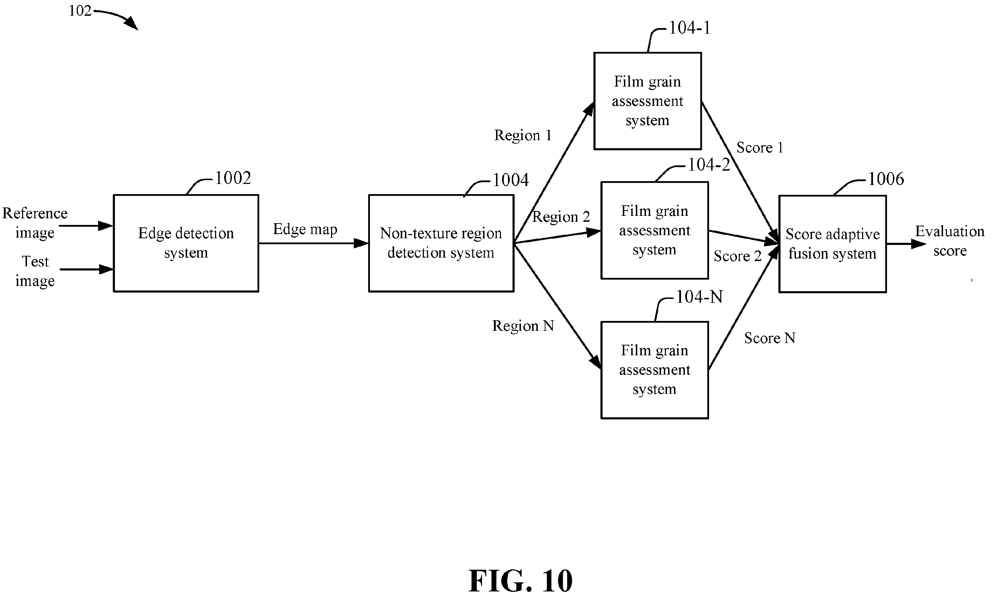

FIG. 10 depicts a more detailed example of server system 102 according to some embodiments. Edge detection system 1002 may use different edge detection methods such as Sobel detector, Canny detector, and so on. Edge detection system 1002 may perform edge detection using non-overlapped shapes in an image, such as a block may be used to analyze portions of the image at a time. NxN blocks may be used. In some examples, the size of the blocks may be 32x32, but other sizes may be used such as 128x128, 256x256, etc.

Edge detection system 1002 may identify non-texture regions, which may be regions in which the texture that is evaluated does not meet a threshold. For each block, edge detection system 1002 may determine if it is classified as a non-texture region or texture region. The classification may be based on characteristic values of the block, such as the gradient, variance, Luma value, and so on. In some embodiments, for 10 bit videos, if the Luma value is smaller than 130 or larger than 850, film grain becomes almost unobservable to a human viewer. There may not be any use in assessing the quality or similarity of the film grain in these areas. Hence, edge detection system 1002 may consider these pixels to be high texture pixels. Also, if the variance of a block is smaller than a threshold, this block may also have no film grain. Film grain may be random pixel values. If a region, such as a pure white/black block, has film grain, the variance of this block should be larger than 0 at least. In other regions, if the variance is too small, the film grain can be very slight that makes it different for a human to perceive. Thus, this region may not need to be analyzed. Accordingly, edge detection system 1002 may classify this block as a texture region. Blocks are classified as non-texture regions when the above threshold is not met (e.g., is higher than a threshold).

Edge detection system 1002 outputs an edge map that summarizes the edges of the images. Non-texture region detection system 1004 may classify the edge map for respective blocks as a non-texture region or a texture region. Film grain assessment system may analyze each block as a region. A region may be formed from a single block. Also, multiple blocks may be combined into a region. For example, if multiple neighboring blocks are classified with the same classification, non-texture region detection system 1004 may combine the blocks with the same classification into a region. A single instance of film grain assessment system 104 may be used.

Multiple instances of film grain assessment system 104-1 to 104-N are shown that can analyze regions 1, region 2, ..., region N in parallel. Each film grain assessment system 104 may output a score for a region, such as a score 1, score 2, and a score N are output for region 1, region 2, ..., region N. If each region is a block, then there are N blocks and N scores in total. Score-adaptive fusion system 1006 may combine these scores and output an assessment score that evaluates the similarity of film grain and reference image and the test image. The final score may be calculated based on combining the N scores, such as using a weighted average of the N score. The final score is calculated by the weighted average of these N scores, such as using:

$$Score = \sum_{i=1}^{N} w_i Score_i,$$

where $w_1$, $w_2$, ... , $w_n$ are the weights. And $\sum_{i=1}^{N} w_i = 1$.

The weights may be based on a rating of the regions. For example, regions that included less texture may be weighted higher compared to regions that included more texture. Weights may also be determined based on other factors, such as a position in the image, the size of a number of blocks that are neighboring, etc. Block may be weighted higher in a larger region compared to a single block that is isolated in a section of the image because the larger region of blocks may have more noticeable film grain compared to the one block that is isolated.

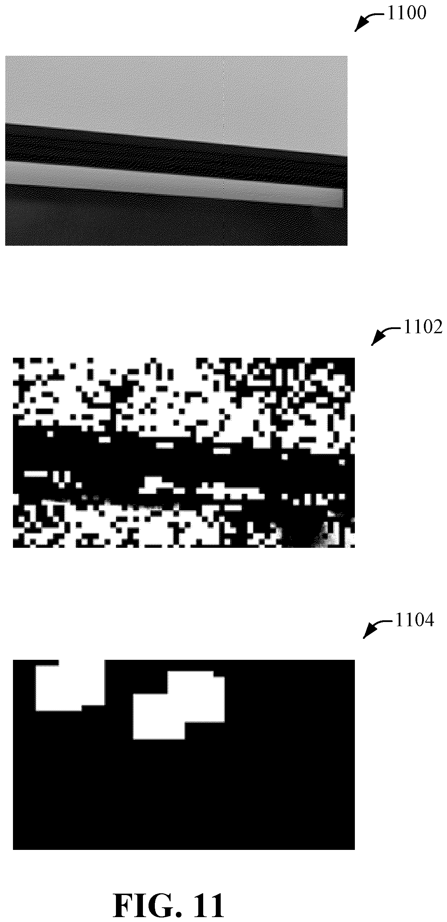

FIG. 11 depicts an input image, an edge map of the input image, and the output of the non-texture region detection according to some embodiments. At 1100, the input image is shown. The input image may include different content. Here, the input image includes different striped bands of different colors. At 1102, an edge map of the input image is shown. The black or dark portions of the edge map may represent locations where edges have been detected in the original image, and are texture regions. These may be points where there may be edges in the original input image and there is a change in pixel values, such as intensity or color. The white or lighter regions may be regions where less or no edges have been detected, and are non-texture regions. These regions may be where there is little or no change in pixel value, such as intensity or color, which indicates a smoother uniform area in the image change.

At 1104, the non-texture region detection is shown. The white or lighter regions may include non-texture regions and the black or darker regions include texture regions. The sizes of the blocks may be different sizes and may form continuous portions of the image. However, within the continuous portions there may be a number of NxN blocks that may be analyzed as singular regions.

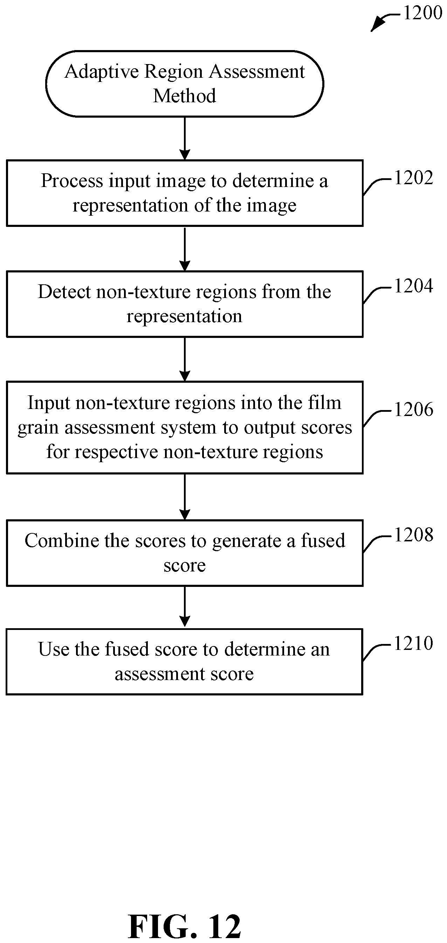

FIG. 12 depicts a simplified flowchart 1200 of a method for determining an assessment score with an adaptive region selection according to some embodiments. At 1202, edge detection system 1002 processes an input image to determine a representation of the image. For example, an edge map of the image may be determined. The input image here may be the reference image or the test image and the process may be performed for both images.

At 1204, non-texture region detection system 1004 detects non-texture regions from the representation. For example, blocks of the representation may be analyzed to determine regions that are classified as non-texture regions.

At 1206, non-texture regions are input into film grain assessment system 104 through output scores for respective non-texture regions. For example, each non-texture region may be analyzed and a respective score is determined. At 1208, score-adaptive fusion system 106 combines the scores to generate a fused score. The combination may use the weighted average, or other methods. At 1210, processing system 106 uses the fused score to determine an assessment score.

Accordingly, by using regions that are classified as non-texture regions, the assessment score may be improved. For example, by removing some regions in which film grain may not be easily perceivable by human viewers, the similarity score may be more accurate by comparing regions in which film grain may be more perceivable by human viewers. This produces an assessment score that is more accurate in determining whether the film grain in two images is similar

System

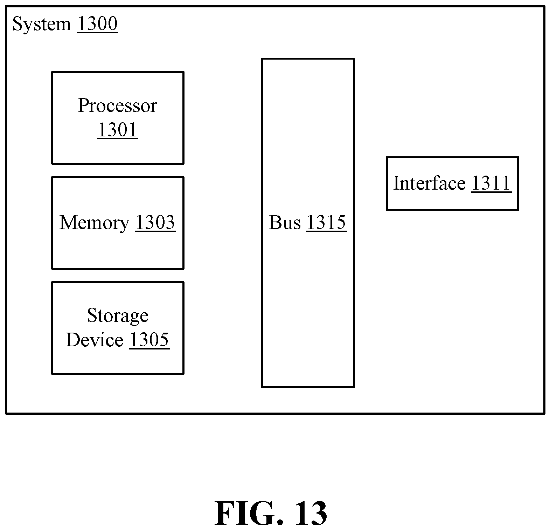

FIG. 13 illustrates one example of a computing device according to some embodiments. According to various embodiments, a system 1300 suitable for implementing embodiments described herein includes a processor 1301, a memory module 1303, a storage device 1305, an interface 1311, and a bus 1315 (e.g., a PCI bus or other interconnection fabric.) System 1300 may operate as a variety of devices such as any other device or service described herein. Although a particular configuration is described, a variety of alternative configurations are possible. The processor 1301 may perform operations such as those described herein. Instructions for performing such operations may be embodied in the memory 1303, on one or more non-transitory computer readable media, or on some other storage device. Various specially configured devices can also be used in place of or in addition to the processor 1301. Memory 1303 may be random access memory (RAM) or other dynamic storage devices. Storage device 1305 may include a non-transitory computer-readable storage medium holding information, instructions, or some combination thereof, for example instructions that when executed by the processor 1301, cause processor 1301 to be configured or operable to perform one or more operations of a method as described herein. Bus 1315 or other communication components may support communication of information within system 1300. The interface 1311 may be connected to bus 1315 and be configured to send and receive data packets over a network. Examples of supported interfaces include, but are not limited to: Ethernet, fast Ethernet, Gigabit Ethernet, frame relay, cable, digital subscriber line (DSL), token ring, Asynchronous Transfer Mode (ATM), High-Speed Serial Interface (HSSI), and Fiber Distributed Data Interface (FDDI). These interfaces may include ports appropriate for communication with the appropriate media. They may also include an independent processor and/or volatile RAM. A computer system or computing device may include or communicate with a monitor, printer, or other suitable display for providing any of the results mentioned herein to a user.

Any of the disclosed implementations may be embodied in various types of hardware, software, firmware, computer readable media, and combinations thereof. For example, some techniques disclosed herein may be implemented, at least in part, by non-transitory computer-readable media that include program instructions, state information, etc., for configuring a computing system to perform various services and operations described herein. Examples of program instructions include both machine code, such as produced by a compiler, and higher-level code that may be executed via an interpreter. Instructions may be embodied in any suitable language such as, for example, Java, Python, C++, C, HTML, any other markup language, JavaScript, ActiveX, VBScript, or Perl. Examples of non-transitory computer-readable media include, but are not limited to: magnetic media such as hard disks and magnetic tape; optical media such as flash memory, compact disk (CD) or digital versatile disk (DVD); magnetooptical media; and other hardware devices such as read-only memory ("ROM") devices and random-access memory ("RAM") devices. A non-transitory computer-readable medium may be any combination of such storage devices.

In the foregoing specification, various techniques and mechanisms may have been described in singular form for clarity. However, it should be noted that some embodiments include multiple iterations of a technique or multiple instantiations of a mechanism unless otherwise noted. For example, a system uses a processor in a variety of contexts but can use multiple processors while remaining within the scope of the present disclosure unless otherwise noted. Similarly, various techniques and mechanisms may have been described as including a connection between two entities. However, a connection does not necessarily mean a direct, unimpeded connection, as a variety of other entities (e.g., bridges, controllers, gateways, etc.) may reside between the two entities.

Some embodiments may be implemented in a non-transitory computer-readable storage medium for use by or in connection with the instruction execution system, apparatus, system, or machine. The computer-readable storage medium contains instructions for controlling a computer system to perform a method described by some embodiments. The computer system may include one or more computing devices. The instructions, when executed by one or more computer processors, may be configured or operable to perform that which is described in some embodiments.

As used in the description herein and throughout the claims that follow, "a", "an", and "the" include plural references unless the context clearly dictates otherwise. Also, as used in the description herein and throughout the claims that follow, the meaning of "in" includes "in" and "on" unless the context clearly dictates otherwise.

The above description illustrates various embodiments along with examples of how aspects of some embodiments may be implemented. The above examples and embodiments should not be deemed to be the only embodiments and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

**Claims**

1. A method comprising:

    receiving a first image and a second image for a comparison of film grain;
    analyzing the first image or the second image to determine a first texture representation of the first image or a second texture representation of the second image;
    selecting a set of regions based on the first texture representation or the second texture representation;
    converting the set of regions from a spatial domain to a frequency domain to generate a first frequency domain representation for the set of regions in the first image and a second frequency domain representation for the set of regions in the second image; and
    generating a score for an assessment of differences of the film grain in the first image and the second image based on the first frequency domain representation and the second frequency domain representation.

2. The method of claim 1, wherein:

    the first texture representation is based on a texture of content in the first image, or
    the second texture representation is based on the texture of content in the second image.

3. The method of claim 1 or 2, wherein analyzing the first image or the second image comprises:
detecting variations in content in the first image to determine the first texture representation or content in the second image to determine the second texture representation.

4. The method of any of the preceding claims, wherein analyzing the first image or the second image comprises:
performing edge detection on content in the first image to determine the first texture representation or the second image to determine the second texture representation.

5. The method of any of the preceding claims, wherein analyzing the first image or the second image comprises:

    comparing a characteristic of a plurality of regions to a threshold; and
    adding a region to the set of regions when a respective characteristic meets the threshold.

6. The method of claim 5, wherein comparing the characteristic of the plurality of regions to the threshold comprises:

    comparing a luma value of a region to a first threshold and a second threshold; and
    adding the region to the set of regions when the luma value is in between the first threshold and the second threshold.

7. The method of claim 5 or 6, wherein comparing the characteristic of the plurality of regions to the threshold comprises:

    comparing a variance of a region to the threshold; and
    adding the region to the set of regions when the variance is greater than the threshold.

8. The method of any of the preceding claims, wherein analyzing the first image or the second image comprises:

    determining a first portion of regions that is classified as non-texture regions;

determining a second portion of regions that is classified as texture regions; and
adding the first portion of regions to the set of regions.

9. The method of claim 8, further comprising:

not adding the second portion of regions to the set of regions,
wherein optionally regions in the second portion of regions include more detected edges than regions in the first portion of regions.

10. The method of any of the preceding claims, wherein a region in the set of regions comprises a block.

11. The method of any of the preceding claims, further comprising:

generating a set of scores for the set of regions; and
combining the set of scores to determine the score for the assessment of differences of the film grain.

12. The method of claim 11, wherein scores in the set of scores are weighted based on respective ratings of regions in the set of regions.

13. The method of any of the preceding claims, further comprising:

performing an action based on the score,
wherein performing the action optionally comprises:
adjusting a parameter of a process that was used to generate film grain for the second image.

14. A non-transitory computer-readable storage medium having stored thereon computer executable instructions, which when executed by a computing device, cause the computing device to carry out the method of any one of claims 1 to 13.

15. An apparatus comprising:
one or more computer processors; and
a computer-readable storage medium comprising instructions for controlling the one or more computer processors to be operable for:

receiving a first image and a second image for a comparison of film grain;
analyzing the first image or the second image to determine a first texture representation of the first image or a second texture representation of the second image;
selecting a set of regions based on the first texture representation or the second texture representation;
converting the set of regions from a spatial domain to a frequency domain to generate a first frequency domain representation for the set of regions in the first image and a second frequency domain representation for the set of regions in the second image; and
generating a score for an assessment of differences of the film grain in the first image and the second image based on the first frequency domain representation and the second frequency domain representation.

100

**FIG. 1**

**FIG. 2**

FIG. 3

FIG. 4

EP 4 586 194 A1

**FIG. 5**

FIG. 6

700

```
┌─────────────────────────────┐
│    Spatial-to-Frequency     │
│     Conversion Method       │
└─────────────────────────────┘
              │
              ▼
┌─────────────────────────────┐
│ Receive spatial-to-frequency│──702
│ conversion method decision  │
└─────────────────────────────┘
              │
              ▼
┌─────────────────────────────┐
│ Input image into steerable  │──704
│          pyramid            │
└─────────────────────────────┘
              │
              ▼
┌─────────────────────────────┐
│ Determine subbands from the │──706
│ output of the steerable     │
│          pyramid            │
└─────────────────────────────┘
              │
              ▼
┌─────────────────────────────┐
│ Select one or more of the   │──708
│ sub-bands based on the      │
│ conversion method decision  │
└─────────────────────────────┘
              │
              ▼
┌─────────────────────────────┐
│ Convert the subbands to the │──710
│     frequency domain        │
└─────────────────────────────┘
              │
              ▼
┌─────────────────────────────┐
│  Output the frequency domain│──712
│ representation of the one or│
│ more sub-bands to the       │
│  metrics calculation        │
└─────────────────────────────┘
```

# FIG. 7

```
                                              ┌── 800
        ╭─────────────────────────────╮
        │  Metrics Calculation Method │
        ╰─────────────────────────────╯
                      │
                      ▼
        ┌─────────────────────────────┐ ┌── 802
        │ Receive the subbands in the │
        │     frequency domain        │
        └─────────────────────────────┘
                      │
                      ▼
        ┌─────────────────────────────┐ ┌── 804
        │ Convert the 2D representation│
        │  to a 1D representation for  │
        │       the sub-bands          │
        └─────────────────────────────┘
                      │
                      ▼
        ┌─────────────────────────────┐ ┌── 806
        │ Generate a distribution of  │
        │ frequencies of the 1D       │
        │ representation for the subbands│
        └─────────────────────────────┘
                      │
                      ▼
        ┌─────────────────────────────┐ ┌── 808
        │   Determine a difference    │
        │  between distribution of    │
        │ frequencies for the sub-    │
        │          bands              │
        └─────────────────────────────┘
                      │
                      ▼
        ┌─────────────────────────────┐ ┌── 810
        │Output the difference scores │
        │      for each band          │
        └─────────────────────────────┘
                      │
                      ▼
        ┌─────────────────────────────┐ ┌── 812
        │ Perform fusion of the scores│
        │ to generate an assessment   │
        │          score              │
        └─────────────────────────────┘
```

# FIG. 8

**FIG. 9**

EP 4 586 194 A1

**FIG. 10**

FIG. 11

1200

Adaptive Region Assessment
Method

↓

Process input image to determine a
representation of the image    1202

↓

Detect non-texture regions from the
representation    1204

↓

Input non-texture regions into the film
grain assessment system to output scores
for respective non-texture regions    1206

↓

Combine the scores to generate a fused
score    1208

↓

Use the fused score to determine an
assessment score    1210

# FIG. 12

System 1300

Processor 1301

Memory 1303

Storage Device 1305

Bus 1315

Interface 1311

# FIG. 13

Europäisches
Patentamt
European
Patent Office
Office européen
des brevets

# EUROPEAN SEARCH REPORT

**Application Number**

EP 24 20 2108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/275222 A1 (INTERDIGITAL VC HOLDINGS FRANCE SAS [FR]) 5 January 2023 (2023-01-05) * abstract; figures 1, 5, * * page 12, lines 21-37 * * page 7, lines 19-29 * * page 8, lines 31-34 * * page 9, line 31 - page 10, line 10 * * page 14, lines 10-19 * ----- | 1-15 | INV. G06T7/42 G06T5/70 |
| A | EP 1 673 944 B1 (INTERDIGITAL VC HOLDINGS INC [US]) 4 September 2019 (2019-09-04) * the whole document * ----- | 1-15 | |
| A | US 7 742 655 B2 (THOMSON LICENSING [FR]) 22 June 2010 (2010-06-22) * the whole document * ----- | 1-15 | |

| | |
|---|---|
| | TECHNICAL FIELDS SEARCHED (IPC) |
| | G06T |

The present search report has been drawn up for all claims

| Place of search | Date of completion of the search | Examiner |
|---|---|---|
| Munich | 20 March 2025 | Rodes Arnau, Isabel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 2108

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| WO 2023275222 | A1 | 05-01-2023 | CN | 117751575 A | 22-03-2024 |
| | | | EP | 4364424 A1 | 08-05-2024 |
| | | | US | 2024323453 A1 | 26-09-2024 |
| | | | WO | 2023275222 A1 | 05-01-2023 |
| EP 1673944 | B1 | 04-09-2019 | AU | 2004306878 A1 | 28-04-2005 |
| | | | BR | PI0415307 A | 05-12-2006 |
| | | | BR | PI0415404 A | 05-12-2006 |
| | | | CA | 2540852 A1 | 28-04-2005 |
| | | | CN | 1868215 A | 22-11-2006 |
| | | | CN | 1868216 A | 22-11-2006 |
| | | | EP | 1673943 A1 | 28-06-2006 |
| | | | EP | 1673944 A1 | 28-06-2006 |
| | | | ES | 2749373 T3 | 20-03-2020 |
| | | | HK | 1096515 A1 | 01-06-2007 |
| | | | HU | E046111 T2 | 28-02-2020 |
| | | | JP | 4685021 B2 | 18-05-2011 |
| | | | JP | 2007508788 A | 05-04-2007 |
| | | | JP | 2007508789 A | 05-04-2007 |
| | | | KR | 20060132813 A | 22-12-2006 |
| | | | KR | 20060132815 A | 22-12-2006 |
| | | | MX | PA06004097 A | 27-06-2006 |
| | | | MX | PA06004099 A | 25-08-2006 |
| | | | PL | 1673944 T3 | 31-03-2020 |
| | | | PT | 1673944 T | 24-10-2019 |
| | | | RU | 2340944 C2 | 10-12-2008 |
| | | | SG | 147440 A1 | 28-11-2008 |
| | | | US | 2007070241 A1 | 29-03-2007 |
| | | | WO | 2005039188 A1 | 28-04-2005 |
| | | | WO | 2005039189 A1 | 28-04-2005 |
| US 7742655 | B2 | 22-06-2010 | AU | 2004240456 A1 | 02-12-2004 |
| | | | AU | 2004241535 A1 | 02-12-2004 |
| | | | AU | 2010202031 A1 | 10-06-2010 |
| | | | BR | PI0410320 A | 23-05-2006 |
| | | | BR | PI0410383 A | 04-07-2006 |
| | | | CA | 2525937 A1 | 02-12-2004 |
| | | | CA | 2526016 A1 | 02-12-2004 |
| | | | CA | 2875893 A1 | 02-12-2004 |
| | | | CA | 2875894 A1 | 02-12-2004 |
| | | | CN | 1788281 A | 14-06-2006 |
| | | | CN | 1791891 A | 21-06-2006 |
| | | | CN | 101350891 A | 21-01-2009 |
| | | | DK | 1627360 T3 | 02-01-2019 |
| | | | DK | 3457359 T3 | 23-03-2020 |
| | | | DK | 3678097 T3 | 30-11-2020 |

EPO FORM P0459

For more details about this annex : see Official Journal of the European Patent Office, No. 12/82

page 1 of 3

## ANNEX TO THE EUROPEAN SEARCH REPORT
## ON EUROPEAN PATENT APPLICATION NO.

EP 24 20 2108

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | | Publication date |
|---|---|---|---|---|
| | | DK | 3798988 T3 | 30-08-2021 |
| | | DK | 3862973 T3 | 14-02-2022 |
| | | DK | 3913579 T3 | 22-08-2022 |
| | | EP | 1627359 A2 | 22-02-2006 |
| | | EP | 1627360 A1 | 22-02-2006 |
| | | EP | 3457359 A1 | 20-03-2019 |
| | | EP | 3678097 A1 | 08-07-2020 |
| | | EP | 3798988 A1 | 31-03-2021 |
| | | EP | 3862973 A1 | 11-08-2021 |
| | | EP | 3913579 A1 | 24-11-2021 |
| | | EP | 4083923 A1 | 02-11-2022 |
| | | ES | 2697523 T3 | 24-01-2019 |
| | | ES | 2781093 T3 | 28-08-2020 |
| | | ES | 2834393 T3 | 17-06-2021 |
| | | ES | 2886351 T3 | 17-12-2021 |
| | | ES | 2907226 T3 | 22-04-2022 |
| | | ES | 2925988 T3 | 20-10-2022 |
| | | HK | 1087232 A1 | 06-10-2006 |
| | | HU | E048360 T2 | 28-07-2020 |
| | | HU | E052520 T2 | 28-05-2021 |
| | | HU | E055529 T2 | 28-12-2021 |
| | | HU | E057558 T2 | 28-05-2022 |
| | | HU | E059614 T2 | 28-12-2022 |
| | | JP | 4919804 B2 | 18-04-2012 |
| | | JP | 4960703 B2 | 27-06-2012 |
| | | JP | 2007514336 A | 31-05-2007 |
| | | JP | 2007515846 A | 14-06-2007 |
| | | JP | 2010206808 A | 16-09-2010 |
| | | JP | 2011071998 A | 07-04-2011 |
| | | JP | 2012124952 A | 28-06-2012 |
| | | KR | 20050121757 A | 27-12-2005 |
| | | KR | 20060015725 A | 20-02-2006 |
| | | MX | PA05012294 A | 31-05-2006 |
| | | MX | PA05012295 A | 31-05-2006 |
| | | MY | 145597 A | 29-02-2012 |
| | | MY | 165687 A | 20-04-2018 |
| | | PL | 1627360 T3 | 28-02-2019 |
| | | PL | 3457359 T3 | 13-07-2020 |
| | | PL | 3678097 T3 | 08-03-2021 |
| | | PL | 3798988 T3 | 13-12-2021 |
| | | PL | 3862973 T3 | 04-04-2022 |
| | | PL | 3913579 T3 | 19-09-2022 |
| | | PT | 1627360 T | 29-11-2018 |
| | | PT | 3457359 T | 02-04-2020 |
| | | PT | 3678097 T | 07-12-2020 |
| | | PT | 3798988 T | 08-09-2021 |

EPO FORM P0459

For more details about this annex : see Official Journal of the European Patent Office, No. 12/82

page 2 of 3

## ANNEX TO THE EUROPEAN SEARCH REPORT
## ON EUROPEAN PATENT APPLICATION NO.

EP 24 20 2108

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | Publication date | Patent family member(s) | | Publication date |
|---|---|---|---|---|
| | | PT | 3862973 T | 17-02-2022 |
| | | PT | 3913579 T | 26-08-2022 |
| | | RU | 2377652 C2 | 27-12-2009 |
| | | RU | 2010102017 A | 27-07-2011 |
| | | SI | 1627360 T1 | 31-12-2018 |
| | | SI | 3457359 T1 | 30-04-2020 |
| | | SI | 3678097 T1 | 30-04-2021 |
| | | SI | 3798988 T1 | 30-11-2021 |
| | | SI | 3862973 T1 | 29-04-2022 |
| | | SI | 3913579 T1 | 30-09-2022 |
| | | US | 2006256873 A1 | 16-11-2006 |
| | | WO | 2004104931 A1 | 02-12-2004 |
| | | WO | 2004105250 A2 | 02-12-2004 |
| | | ZA | 200509227 B | 30-05-2007 |
| | | ZA | 200509231 B | 28-11-2007 |

EPO FORM P0459

For more details about this annex : see Official Journal of the European Patent Office, No. 12/82

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63620134